# EUROPEAN PATENT SPECIFICATION

(11) **EP 2 763 208 B1**
(45) Date of publication and mention of the grant of the patent: **13.04.2016**
(21) Application number: 13193764.1
(22) Date of filing: 21.11.2013
(51) Int. Cl.: H01M 2/10

(54) **Battery pack**
Batteriepack
Bloc-batterie

(30) Priority: 01.02.2013 KR 20130011984
(43) Date of publication of application: 06.08.2014
(73) Proprietor: Samsung SDI Co., Ltd., Gyeonggi-do 449-577 (KR)
(72) Inventor: Lee, Eun-Joong, Yongin-si, Gyeonggi-do (KR); Moon, Dae-Yon, Yongin-si, Gyeonggi-do (KR)
(74) Representative: Gulde & Partner

(56) References cited:
- EP-A1- 2 169 739
- EP-A1- 2 207 223

## Description

### FIELD OF THE INVENTION

Embodiments relate to a batttery pack.

### DESCRIPTION OF THE RELATED ART

Generally, a secondary battery denotes a rechargeable and dischargeable battery, which is widely used in small mobile equipment, such as smart phones, ultra-slim notebooks, tablet personal computers, mobile information terminals, camcorders, videos, or digital cameras, or in medium and large size electronic devices, such as electric vehicles, hybrid vehicles, electric bicycles, uninterruptible power supply (UPS) devices, or energy storage systems (ESS). A battery pack may have a plurality of battery cells that are electrically connected to each other.

EP 2 169 739 A1 discloses a battery comprising a plurality of battery cells and a case including first case and second cases. Here, the first case and second cases are combined by coupling protrusions of the first case and coupling holes of the second case. The case further includes auxiliary protrusions and auxiliary holes to couple the firs and second cases.

EP 2 207 223 A1 discloses a battery comprising a plurality of battery cells and a case including first case and second cases. The first and second cases are combined by coupling holes formed at a first rib of the first case and ribs provided on the second case. The first rib further includes a sub portion to block the separation of the coupling holes and the ribs.

### SUMMARY

Embodiments are directed to a battery pack, including a plurality of battery cells; and a case, the case including a first case and a second case, the second case being combined with the first case to accommodate the battery cells therebetween. The case may include a combining unit and a separation prevention unit, the combining unit and the separation prevention unit being disposed in different locations in the case, the combining unit being configured to combine the first case and the second case with each other, and the separation prevention unit being configured to prevent separation of the combining unit.

The first and second cases may be combined to form an inner space therebetween to accommodate the battery cells, and the combining unit and the separation prevention unit may be interleaved along an outer circumference of the case.

The combining unit may include hooks and hook-combining holes, the first case including the hooks, and second case including the hook-combining holes, the hook-combining holes of the second case being positioned to correspond to the hooks of the first case, and the separation prevention unit may include ribs that protrude from the second case towards the first case.

The second case may have the hook-combining holes and the ribs arranged such that at least some of the ribs are disposed between neighboring hook-combining holes. Here, the term "at least some of the ribs" may be for example, at least half of the ribs. A first rim unit may form an outer circumference of the first case, and a second rim unit may form an outer circumference of the second case, the hooks may protrude toward the second case from an edge of the first rim unit of the first case, and the hook-combining holes may be disposed along the second rim unit of the second case.

Each of the hooks may include a main body unit extending from the first case and a hook stopper unit that protrudes from the main body unit, and the hook-combining holes of the second case may be sized to receive the hook stopper units of the first case.

The second case may include spaces for accommodating the hooks of the first case, the spaces being located on an inner wall of the second rim unit of the second case.

The spaces may be recesses in the inner wall of the second rim unit, the spaces receiving the main body unit of the hooks.

The ribs of the second case may overlap with the first case.

The ribs of the second case may be combined with the first case by overlapping with the first case.

The first case may include spaces for accommodating the ribs of the second case, the spaces being located on an inner wall of the first case.

The spaces may be recesses in the inner wall of the first rim unit, the spaces receiving the ribs.

The ribs may protrude toward the first case from an edge of the second rim unit of the second case.

The combining unit may include hooks and hook-combining holes, the hooks being on one of the first and second cases, the hook-combining holes being on the other of the first and second cases, the hook-combining holes being located at positions corresponding to the hooks, and the separation prevention unit may include ribs, the ribs being on the other of the first and second cases along with the hooks.

The hooks and the hook-combining holes may be located up and down on a same line of the combined first and second cases, and at least some of the ribs may be located between neighboring hook-combining holes.

The hooks may protrude from an edge of one of the first and second cases, and the ribs may protrude from an edge of the other one of the first and second cases to be combined with the one of the first and second cases, the ribs overlapping with the one of the first and second cases.

The ribs may be located on an inner wall of the one of the first and second cases when the first and second cases are combined.

The inner wall may include spaces for receiving the ribs, the spaces being recessed in the inner wall.

### BRIEF DESCRIPTION OF THE DRAWINGS

Features will become apparent to those of skill in the art by describing in detail example embodiments with reference to the attached drawings in which:
FIG. 1 an exploded perspective view of a battery pack according to an embodiment;
FIG. 2 illustrates a magnified perspective view of the first and second cases of FIG. 1;
FIG. 3 illustrates a magnified perspective view of the first and second cases that are installed in a direction opposite to each other;
FIG. 4 illustrates a magnified perspective view of a cross-section of a portion of a combining unit of FIG. 3;
FIG. 5 illustrates a magnified perspective view of a cross-section of a portion of a separation prevention unit of FIG. 3;
FIG. 6 illustrates a magnified perspective view showing a combined state of the first and second cases of FIG. 3;
FIG. 7 illustrates a front view of the first and second cases of FIG. 6; and
FIG. 8 illustrates a magnified perspective view of the combining unit and the separation prevention unit of FIG. 6.

### DETAILED DESCRIPTION

Hereafter, the battery pack according to example embodiments will be described more fully with reference to the accompanying drawings. In the drawings, like reference numerals are used to indicate elements that are substantially identical to the elements, and thus, the detailed description thereof will not be repeated.

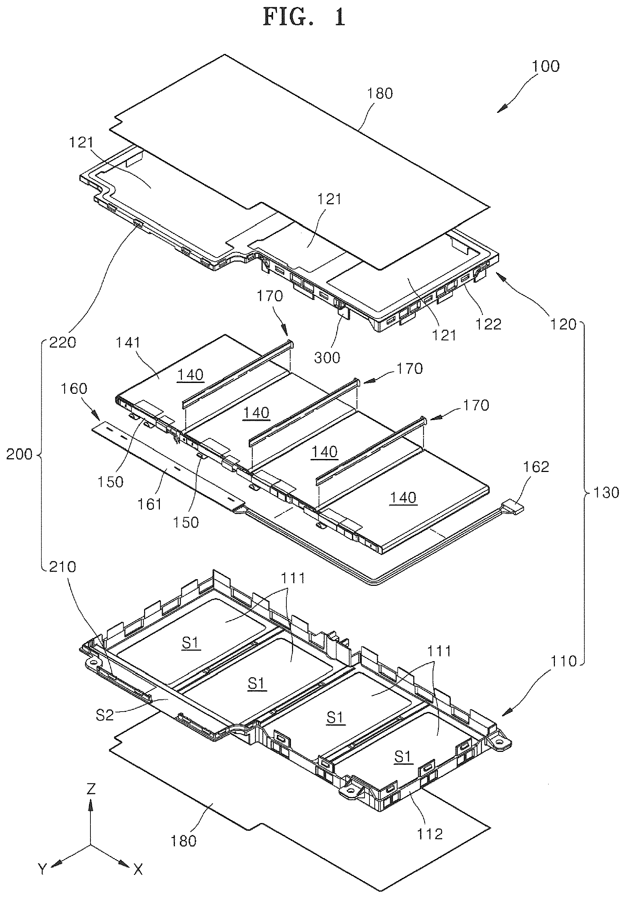

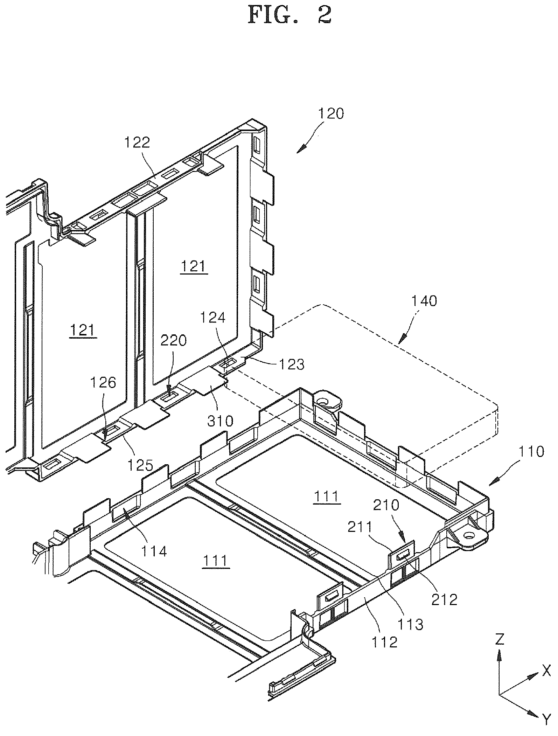

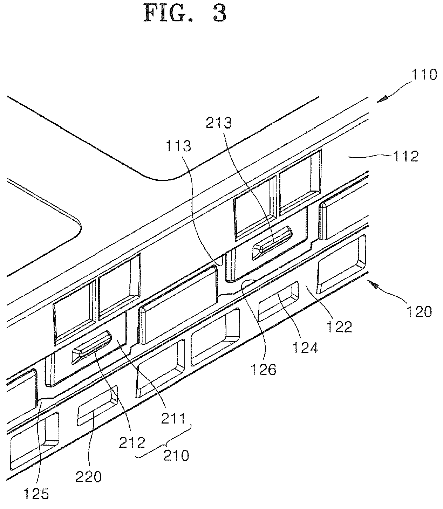

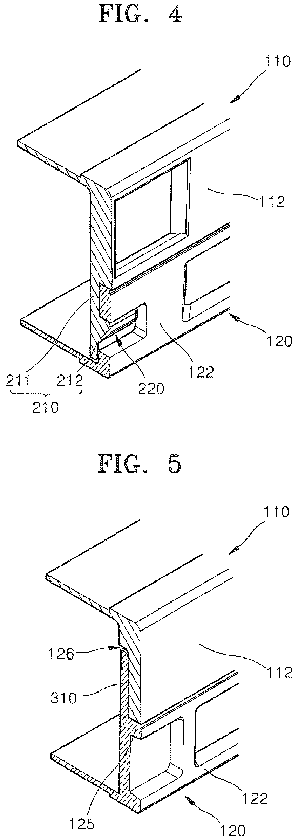

FIG. 1 an exploded perspective view of a battery pack 100 according to an embodiment. FIG. 2 is a magnified perspective view of the first and second cases 110 and 120 of FIG. 1. FIG. 3 is a magnified perspective view of the first and second cases 110 and 120 that are installed in a direction opposite to each other. FIG. 4 is a magnified perspective view of a cross-section of a portion of a combining unit 200 of FIG. 3. FIG. 5 is a magnified perspective view of a cross-section of a portion of a separation prevention unit 300 of FIG. 3.

In the example embodiment shown in FIGS. 1 through 5, the battery pack 100 includes a case 130, having the first and second cases 110 and 120, and a plurality of battery cells 140 that is accommodated between the first and second cases 110 and 120 and is arranged in parallel.

The first and second cases 110 and 120 form a space S1, for accommodating the battery cells 140, and a space S2, for accommodating a protection circuit module 160, by combining with each other.

The first and second cases 110 and 120 may be formed by, e.g., molding injection using an insulating plastic material. The plastic material may be one selected from the group consisting of polyvinyl chloride (PVC) resin, polystyrene (PS), polypropylene (PP), polycarbonate (PC), and polyimide (PI), but is limited thereto.

The first case 110 may include a plurality of first openings 111, and a side surface of the battery cells 140 may be exposed through the first openings 111. The first openings 111 may be surrounded by a first rim unit 112.

The second case 120 may also include a plurality of second openings 121 through which the other surface of the battery cells 140 may be exposed. The second openings 121 may be surrounded by a second rim unit 122.

The battery cells 140 are rechargeable secondary batteries, and may be formed of, for example, lithium-ion cells. The battery cells 140 each includes a can 141 that accommodates an electrode assembly (not shown). The electrode assembly may be manufactured in a jelly-roll type by winding a stack of an anode plate, a cathode plate, and a separator interposed between the anode plate and the cathode plate.

The can 141 is formed of a metal material, and a surface of the can 141 may have a first charge. For example, the can 141 may be formed of aluminum or an alloy of aluminum, etc.

The battery cells 140 may be arranged side-by-side in a direction, and the battery cells 140 may be connected in series or parallel via a lead plate 150. In the present example embodiment, a single battery pack 100 is configured by connecting four battery cells 140 in series, as an example. The number of battery cells 140 that constitute the battery pack 100 and the method of connecting of the battery cells 140 may be configured in various ways.

In the present example embodiment, the battery cells 140 are electrically connected to a protection circuit module 160. The protection circuit module 160 may prevent the battery cells 140 connected in series or parallel from overheating or explosion due to an overcharging, an over-discharging, or an over-current of the battery cells 140.

In the present example embodiment, the protection circuit module 160 includes a substrate 161 and a protection device (not shown) mounted on a side or inside the substrate 161. The protection device (not shown) may include a safety device that includes a passive device, such as a resistor and condenser, an active device, such as a field-effect transistor or an integrated circuit, etc.

In the present example embodiment, the protection circuit module 160 includes a connector 162 for supplying power to external electronic devices. The connector 162 is connected to an electronic device onto which the battery pack 100 is mounted.

An external material of the battery cells 140 may be the can 141 having a first conductivity. Thus, the battery cells 140 disposed parallel to each other may be separated. A spacer 170 may be disposed between the neighboring battery cells 140 to prevent a short circuit therebetween.

The spacer 170 may be formed of an insulating material such as plastic, and may have a length greater than that of the battery cells 140.

A label 180 may be attached to outer surfaces of the first and second cases 110 and 120 which are combined with each other.

In the present example embodiment, the combining unit 200 for combining the first and second cases 110 and 120 and a separation prevention unit 300 for preventing the separation of the combining unit 200 from the combined part are formed on the first and second cases 110 and 120. The combining unit 200 includes a hook 210 and a hook-combining hole 220 to which the hook 210 is combined.

Hereinafter, the first and second cases 110 and 120 having the hooks 210 and the hook-combining hole 220 will be described in detail.

In the present example embodiment, a plurality of first openings 111 are formed in the first case 110. The first rim unit 112 is formed along a circumference of each of the first openings 111 to define the first openings 111.

A plurality of second openings 121 are formed in the second case 120 that is combined with the first case 110. The second rim unit 122 is formed along a circumference of each of the second openings 121 to define the second openings 121.

The first and second cases 110 and 120 are combined with each other in a direction (for example, up-and-down). A space is formed in an inner side of the first and second cases 110 and 120 that are combined with each other, and the space includes the space S1 for accommodating the battery cells 140 and the space S2 for accommodating the protection circuit module 160.

In the present example embodiment, the first rim unit 112 includes a plurality of hooks 210. The hooks 210 are separated from one another in a direction of the first rim unit 112. The hooks 210 may be formed in a width direction and/or a length direction of the first rim unit 112 along an outer side of the first case 110. In the present example embodiment, the hooks 210 are formed both in a width direction and a length direction of the first rim unit 112 along an outer side of the first case 110.

In the present example embodiment, the hooks 210 protrude from an upper edge 113 of the first rim unit 112 that faces the second case 120. Each of the hooks 210 includes a main body unit 211 that extends from the upper edge 113 of the first rim unit 112. The main body unit 211 may form one-body with the first rim unit 112. The main body unit 211 has a plate shape. The main body unit 211 includes a hook stopper unit 212. The hook stopper unit 212 protrudes from a surface of the main body unit 211 to the outside of the first case 110.

The second rim unit 122 includes a plurality of hook-combining holes 220. The hook-combining holes 220 are separated from each other by a predetermined gap along a sidewall 123 of the second rim unit 122. The hook-combining holes 220 are formed on locations of the sidewall 123 of the second rim unit 122 corresponding to the locations of the hooks 210 of the first rim unit 112 when the first and second cases 110 and 120 are combined in an up-and -down direction. The number of hook-combining holes 220 may be equal to the number of the hooks 210.

The hook-combining hole 220 may have a size into which the hook stopper unit 212 may be inserted. When the hook stopper unit 212 is combined with the hook-combining hole 220, a lower surface 213 of the hook stopper unit 212 may be located on the sidewall 123 of the second rim unit 122 that contacts the hook-combining hole 220.

When the first and second cases 110 and 120 are combined up-and-down, a space 126 for accommodating the main body unit 211 of the hook 210 may be formed on a portion of the second rim unit 122 that corresponds to the location of the hook 210. The space 126 may be formed by inwardly digging or recessing a predetermined depth from an inner wall of the second rim unit 122.

When the hooks 210 are combined with the hook-combining holes 220, an interruption of the hooks 210 with respect to the second rim unit 122 may not occur. Also, an upper edge 113 of the first rim unit 112 and a lower edge 125 of the second rim unit 122 may contact each other.

In the present example embodiment, the separation prevention unit 300 is formed on the second case 120. The separation prevention unit 300 includes a rib 310 formed on the second rim unit 122. The rib 310 protrudes from the lower edge 125 of the second rim unit 122 towards the first case 110.

When the first and second cases 110 and 120 are combined up-and-down, the ribs 310 overlap with the first rim unit 112. A space 114 to accommodate the rib 310 may be formed in an inner wall of the first rim unit 112. The space 114 may be formed by inwardly digging or recessing a predetermined depth from the inner wall of the first rim unit 112. The ribs 310 may be located in the spaces 114 and may be combined with the first rim unit 112 by contacting the inner wall of the first rim unit 112.

In the present example embodiment, the combining unit 200 and the separation prevention unit 300 may be interleaved or alternately disposed.

In the present example embodiment, the hooks 210 are separated by a predetermined distance in the first rim unit 112, the hook-combining holes 220 are formed in positions of the second rim unit 122 in the up-and down direction corresponding to the hooks 210, and the ribs 310 are arranged between the hook-combining holes 220 on the second rim unit 122.

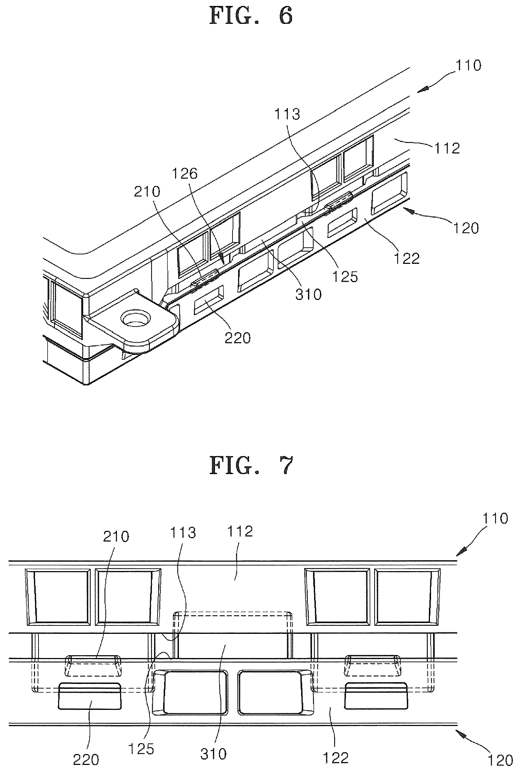

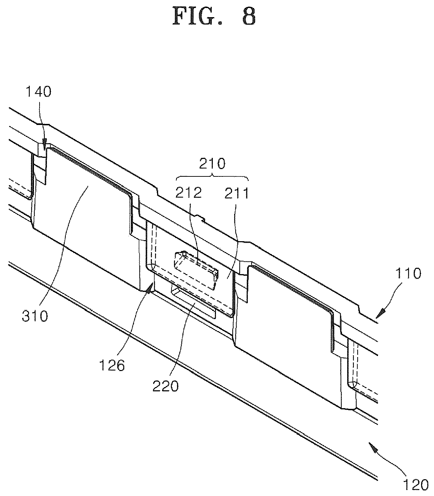

A process of combining of the combining unit 200 having the structure described above and the separation prevention unit 300 will be described with reference to FIGS. 6 through 8. FIG. 6 is a magnified perspective view showing a combined state of the first and second cases 110 and 120 of FIG. 3. FIG. 7 is a front view of the first and second cases 110 and 120 of FIG. 6. FIG. 8 is a magnified perspective view of the combining unit 200 and the separation prevention unit 300 of FIG. 6.

In the present example embodiment, the first and second cases 110 and 120 are arranged in the up-and down direction. The upper edge 113 of the first rim unit 112 of the first case 110 and the lower edge of the second rim unit 122 of the second case 120 are arranged to contact each other. When the first and second cases 110 and 120 are combined, the hooks 210 formed in the first rim unit 112 are combined with the hook-combining holes 220 formed in the second rim unit 122.

In the present example embodiment, the main body unit 211 of the hook 210 is located in the space 126 formed on an inner wall of the second rim unit 122, and the lower surface 213 of the hook stopper unit 212 is located on the surface 123 of the second rim unit 122 that contact the hook-combining holes 220.

At the same time, the ribs 310 formed on the second rim unit 122 are located in the spaces 140 formed on the inner wall of the first rim unit 112 between the neighboring hooks 210. At this point, the ribs 310 are combined with the first rim unit 112 by a surface contact with the inner wall of the first rim unit 112.

The case 130 having the structure described above locates the hooks 210, the hook-combining holes 220, and the ribs 310 to be separated from each other, and thus, an overall thickness of the case 130 may be reduced.

Also, the hooks 210 may be located on the inner side of the second case 120 and the ribs 310 may be located on the inner side of the first case 110. Thus, the hooks 210 and the ribs 310 may form an interlocking structure. Accordingly, if a portion of the first rim unit 112, on which the hooks 210 are, is bent outwards, the bending of the first rim unit 112 may be countered or off-set at the portion where the ribs 310 are formed, and thus, deformation of the case 130 may be reduced or prevented.

As described above, the combining unit 200 and the separation prevention unit 300 formed on the case 130 may be interleaved or alternately disposed. Thus, a combining force of the combining unit 200 may be increased.

Also, a thickness of a case where the combining unit 200 and the separation prevention unit 300 are formed may be reduced, and thus, the manufacture of a slim battery pack may be enabled.

By way of summation and review, secondary batteries may be classified into an external hard pack and a built-in inner pack according to type of packing in a case. A battery pack may include first and second cases that are installed outside battery cells, and the first and second cases may be assembled in a state that the battery cells are placed between the first and second cases.

As described above, embodiments may provide a slim battery pack having a structural stability, with first and second cases that may be solidly combined.

It is clear for a person skilled in the art that the disclosed embodiments can also be combined where possible.

## Claims

1. A battery pack, comprising:
a plurality of battery cells (140) ; and
a case (130) including a first case (110) and a second case (120), the second case (120) being configured to be combined with the first case (110) to accommodate the battery cells (140) therebetween, wherein:
the case (130) includes a combining unit (200) and a separation prevention unit (300), the combining unit (200) and the separation prevention unit (300) being disposed in different locations in the case, the combining unit (200) being configured to combine the first case (110) and the second case (120) with each other, the separation prevention unit being (300) configured to prevent separation of the combining unit, and,
the combining unit (200) and the separation prevention unit (300) are interleaved along an outer circumference of the case (130).

2. The battery pack as claimed in claim 1 wherein:
the combining unit (200) includes hooks (210) and hook-combining holes (220), and
the separation prevention unit (300) includes ribs (310) that protrude from the second case (120) towards the first case (110).

3. The battery pack as claimed in claim 2, wherein the first case (110) includes the hooks (210), and second case (120) includes the hook-combining holes (220), the hook-combining holes (220) of the second case (120) being positioned to correspond to the hooks (210) of the first case (110).

4. The battery pack as claimed in claim 2 or 3, wherein at least some of the ribs (310) are disposed between neighboring hook-combining holes (220).

5. The battery pack as claimed in one of claims 2 to 4, wherein:
a first rim unit (112) forms an outer circumference of the first case (110), and a second rim unit (122) forms an outer circumference of the second case (120),
the hooks (210) protrude toward the second case (120) from an edge of the first rim unit (112) of the first case (110) and
the hook-combining holes (220) are disposed along the second rim unit (122) of the second case (120).

6. The battery pack as claimed in one of claims 2 to 5 , wherein:
each of the hooks (210) includes a main body unit (211) extending from the first case (110))and a hook stopper unit (212) protruding from the main body unit (211), and
the hook-combining holes (220) of the second case (120) are sized to receive the hook stopper units (212) of the first case (110).

7. The battery pack as claimed in one of claims 2 to 6, wherein the second case (120) includes spaces(126) for accommodating the hooks (210) of the first case (110), the spaces (126) being located on an inner wall of the second rim unit (122) of the second case (120).

8. The battery pack as claimed in claim 7, wherein the spaces (126) are recesses in the inner wall of the second rim unit (122), the spaces receiving the main body unit (211) of the hooks (210).

9. The battery pack as claimed in one of claims 2 to 8, wherein the ribs (310) of the second case (120) overlap with the first case (110) to be combined with the first case (110)..

10. The battery pack as claimed in one of claims 2 to 9, wherein the first case (110) includes spaces (114) for accommodating the ribs (310) of the second case (120), the spaces (114) being located on an inner wall of the first case (110).

11. The battery pack as claimed in claim 10, wherein the spaces (114) are recesses in the inner wall of the first rim unit (112),

12. The battery pack as claimed in one of claims 5 to 11, wherein the ribs (310) protrude toward the first case (110) from an edge of the second rim unit (122) of the second case (120).

13. The battery pack as claimed in one of claims 2 to 12, wherein the ribs (310) are located on an inner wall of the first cases (110) when the first and second cases (110, 120)) are combined.

14. The battery pack as claimed in one of claim 1 or 2, wherein:
the combining unit (200) includes hooks (210) and hook-combining holes (220), the hooks (210) being on one of the first and second cases (110, 120), the hook-combining holes (220) being on the other of the first and second cases (110, 120), the hook-combining holes (220) being located at positions corresponding to the hooks (210), and
the separation prevention unit (300) includes ribs (310), the ribs (310) being on the other of the first and second cases (110, 120) along with the hooks.

## Patentansprüche

1. Batteriepack, umfassend:
eine Mehrzahl von Batteriezellen (140) und
ein Gehäuse (130), das ein erstes Gehäuse (110) und ein zweites Gehäuse (120) beinhaltet, wobei das zweite Gehäuse (120) gestaltet ist, mit dem ersten Gehäuse (110) kombiniert zu werden, um dazwischen die Batteriezellen (140) aufzunehmen, wobei:
das Gehäuse (130) eine Kombinationseinheit (200) und eine Trennungsverhinderungseinheit (300) beinhaltet, wobei die Kombinationseinheit (200) und die Trennungsverhinderungseinheit (300) an unterschiedlichen Positionen im Gehäuse angeordnet sind, wobei die Kombinationseinheit (200) gestaltet ist, das erste Gehäuse (110) und das zweite Gehäuse (120) miteinander zu kombinieren, wobei die Trennungsverhinderungseinheit (300) gestaltet ist, eine Trennung der Kombinationseinheit zu verhindern, und
die Kombinationseinheit (200) und die Trennungsverhinderungseinheit (300) entlang eines Außenumfangs des Gehäuses (130) verschränkt sind.

2. Batteriepack nach Anspruch 1, wobei:
die Kombinationseinheit (200) Haken (210) und Hakenkombinationslöcher (220) beinhaltet und
die Trennungsverhinderungseinheit (300) Rippen (310) beinhaltet, die aus dem zweiten Gehäuse (120) in Richtung des ersten Gehäuses (110) hervorragen.

3. Batteriepack nach Anspruch 2, wobei das erste Gehäuse (110) die Haken (210) beinhaltet und das zweite Gehäuse (120) die Hakenkombinationslöcher (220) beinhaltet, wobei die Hakenkombinationslöcher (220) des zweiten Gehäuses (120) so positioniert sind, dass sie den Haken (210) des ersten Gehäuses (110) entsprechen.

4. Batteriepack nach Anspruch 2 oder 3, wobei zumindest einige der Rippen (310) zwischen benachbarten Hakenkombinationslöchern (220) angeordnet sind.

5. Batteriepack nach einem der Ansprüche 2 bis 4, wobei:
eine erste Randeinheit (112) einen Außenumfang des ersten Gehäuses (110) ausbildet und eine zweite Randeinheit (122) einen Außenumfang des zweiten Gehäuses (120) ausbildet,
die Haken (210) von einer Kante der ersten Randeinheit (112) des ersten Gehäuses (110) in Richtung des zweiten Gehäuses (120) hervorragen und
die Hakenkombinationslöcher (220) entlang der zweiten Randeinheit (122) des zweiten Gehäuses (120) angeordnet sind.

6. Batteriepack nach einem der Ansprüche 2 bis 5, wobei:
jeder der Haken (210) eine Hauptkörpereinheit (211), der sich vom ersten Gehäuse (110) erstreckt, und eine Hakenstoppereinheit (212), die von der Hauptkörpereinheit (211) hervorragt, beinhaltet und
die Hakenkombinationslöcher (220) des zweiten Gehäuses (120) so dimensioniert sind, dass sie die Hakenstoppereinheiten (212) des ersten Gehäuses (110) empfangen.

7. Batteriepack nach einem der Ansprüche 2 bis 6, wobei das zweite Gehäuse (120) Räume (126) zum Aufnehmen der Haken (210) des ersten Gehäuses (110) beinhaltet, wobei die Räume (126) an einer Innenwand der zweiten Randeinheit (122) des zweiten Gehäuses (120) positioniert sind.

8. Batteriepack nach Anspruch 7, wobei die Räume (126) Aussparungen in der Innenwand der zweiten Randeinheit (122) sind, wobei die Räume die Hauptkörpereinheit (211) der Haken (210) empfangen.

9. Batteriepack nach einem der Ansprüche 2 bis 8, wobei die Rippen (310) des zweiten Gehäuses (120) das erste Gehäuse (110) überlappen, um mit dem ersten Gehäuse (110) kombiniert zu werden.

10. Batteriepack nach einem der Ansprüche 2 bis 9, wobei das erste Gehäuse (110) Räume (114) zum Aufnehmen der Rippen (310) des zweiten Gehäuses (120) beinhaltet, wobei die Räume (114) an einer Innenwand des ersten Gehäuses (110) positioniert sind.

11. Batteriepack nach Anspruch 10, wobei die Räume (114) Aussparungen in der Innenwand der ersten Randeinheit (112) sind.

12. Batteriepack nach einem der Ansprüche 5 bis 11, wobei die Rippen (310) von einer Kante der zweiten Randeinheit (122) des zweiten Gehäuses (120) in Richtung des ersten Gehäuses (110) hervorragen.

13. Batteriepack nach einem der Ansprüche 2 bis 12, wobei die Rippen (310) an einer Innenwand des ersten Gehäuses (110) positioniert sind, wenn das erste und das zweite Gehäuse (110, 120) kombiniert sind.

14. Batteriepack nach einem der Ansprüche 1 oder 2, wobei:
die Kombinationseinheit (200) Haken (210) und Hakenkombinationslöcher (220) beinhaltet, wobei sich die Haken (210) an einem des ersten und des zweiten Gehäuses (110, 120) befinden, wobei sich die Hakenkombinationslöcher (220) am anderen des ersten und zweiten Gehäuses (110, 120) befinden, wobei die Hakenkombinationslöcher (220) an Positionen, die den Haken (210) entsprechen, positioniert sind und
die Trennungsverhinderungseinheit (300) Rippen (310) beinhaltet, wobei sich die Rippen (310) zusammen mit den Haken am anderen des ersten und des zweiten Gehäuse (110, 120) befinden.

## Revendications

1. Bloc-batterie comprenant :
une pluralité d'éléments de batterie (140) ; et
un boîtier (130) comportant un premier boîtier (110) et un deuxième boîtier (120), le deuxième boîtier (120) étant configuré pour être combiné avec le premier boîtier (110) pour loger les éléments de batterie (140) entre eux, où :
le boîtier (130) comporte une unité de combinaison (200) et une unité empêchant la séparation (300) ; l'unité de combinaison (200) et l'unité empêchant la séparation (300) étant disposées dans différents emplacements dans le boîtier, l'unité de combinaison (200) étant configurée pour combiner le premier boîtier (110) et le deuxième boîtier (120) l'un avec l'autre, l'unité empêchant la séparation (300) étant configurée pour empêcher la séparation de l'unité de combinaison, et
l'unité de combinaison (200) et l'unité empêchant la séparation (300) sont intercalées le long d'une circonférence externe du boîtier (130).

2. Bloc-batterie tel que revendiqué dans la revendication 1, dans lequel :
l'unité de combinaison (200) comporte des crochets (210) et des trous de combinaison de crochets (220), et
l'unité empêchant la séparation (300) comporte des nervures (310) qui font saillie depuis le deuxième boîtier (120) vers le premier boîtier (110).

3. Bloc-batterie tel que revendiqué dans la revendication 2, dans lequel le premier boîtier (110) comporte les crochets (210), et le deuxième boîtier (120) comporte les trous de combinaison de crochets (220), les trous de combinaison de crochets (220) du deuxième boîtier (120) étant positionnés pour correspondre aux crochets (210) du premier boîtier (110).

4. Bloc-batterie tel que revendiqué dans la revendication 2 ou 3, dans lequel au moins quelques nervures (310) sont disposées entre les trous de combinaison de crochets voisins (220).

5. Bloc-batterie tel que revendiqué dans l'une des revendications 2 à 4, dans lequel :
une première unité périphérique (112) forme une circonférence externe du premier boîtier (110), et une deuxième unité périphérique (122) forme une circonférence externe du deuxième boîtier (120),
les crochets (210) font saillie vers le deuxième boîtier (120) à partir d'un bord de la première unité périphérique (112) du premier boîtier (110), et
les trous de combinaison de crochets (220) sont disposés le long de la deuxième unité périphérique (122) du deuxième boîtier (120).

6. Bloc-batterie tel que revendiqué dans l'une des revendications 2 à 5, dans lequel
chacun des crochets (210) comporte une unité de corps principal (211) s'étendant depuis le premier boîtier (110) et une unité d'arrêt de crochet (212) faisant saillie depuis l'unité de corps principal (211), et
les trous de combinaison de crochets (220) du deuxième boîtier (120) sont dimensionnés pour recevoir les unités d'arrêt de crochets (212) du premier boîtier (110).

7. Bloc-batterie tel que revendiqué dans l'une des revendications 2 à 6, dans lequel le deuxième boîtier (120) comporte des espaces (126) pour loger les crochets (210) du premier boîtier (110), les espaces (126) étant situés sur une paroi interne de la deuxième unité périphérique (122) du deuxième boîtier (120).

8. Bloc-batterie tel que revendiqué dans la revendication 7, dans lequel les espaces (126) sont des évidements dans la paroi interne de la deuxième unité périphérique (122), les espaces recevant l'unité de corps principal (211) des crochets (210).

9. Bloc-batterie tel que revendiqué dans l'une des revendications 2 à 8, dans lequel les nervures (310) du deuxième boîtier (120) se chevauchent avec le premier boîtier (110) pour être combinées avec le premier boîtier (110).

10. Bloc-batterie tel que revendiqué dans l'une des revendications 2 à 9, dans lequel le premier boîtier (110) comporte des espaces (114) pour loger les nervures (310) du deuxième boîtier (120), les espaces (114) étant situés sur une paroi interne du premier boîtier (110).

11. Bloc-batterie tel que revendiqué dans la revendication 10, dans lequel les espaces (114) sont des évidements dans la paroi interne de la première unité périphérique (112).

12. Bloc-batterie tel que revendiqué dans l'une des revendications 5 à 11, dans lequel les nervures (310) font saillie vers le premier boîtier (110) à partir d'un bord de la deuxième unité périphérique (122) du deuxième boîtier (120).

13. Bloc-batterie tel que revendiqué dans l'une des revendications 2 à 12, dans lequel les nervures (310) sont situées sur une paroi interne du premier boîtier (110) lorsque les premier et deuxième boîtiers (110, 120) sont combinés.

14. Bloc-batterie tel que revendiqué dans l'une des revendications 1 et 2, dans lequel
l'unité de combinaison (200) comporte des crochets (210) et des trous de combinaison de crochets (220), les crochets (210) étant sur l'un des premier et deuxième boîtiers (110, 120), les trous de combinaison de crochets (220) étant sur l'autre des premier et deuxième boîtiers (110, 120), les trous de combinaison de crochets (220) étant situés à des positions correspondant aux crochets (210), et
l'unité empêchant la séparation (300) comporte des nervures (310), les nervures (310) étant sur l'autre des premier et deuxième boîtiers (110, 120) conjointement avec les crochets.
